# EUROPÄISCHE PATENTSCHRIFT

(11) **EP 0 521 824 B1**
(45) Veröffentlichungstag und Bekanntmachung des Hinweises auf die Patenterteilung: **20.12.1995**
(21) Anmeldenummer: 92810484.3
(22) Anmeldetag: 25.06.1992
(51) Int. Cl.: B23D 63/18, B21H 1/02

(54) **Kreissägeblatt-Richtmaschine**
Circular saw blade straightening machine
Machine à planer de lames de scie circulaire

(30) Priorität: 02.07.1991 CH 955/91
(43) Veröffentlichungstag der Anmeldung: 07.01.1993
(73) Patentinhaber: Oppliger, Walter, 3138 Uetendorf (CH)
(72) Erfinder: Oppliger, Walter, 3138 Uetendorf (CH)
(74) Vertreter: Martin, Björn

(56) Entgegenhaltungen:
- DE-A- 1 552 716
- DE-A- 3 213 572
- DE-B- 1 267 065
- GB-A- 2 063 734
- US-A- 510 210
- US-A- 2 932 223
- US-A- 3 090 265
- US-A- 4 852 430
- WOOD SCIENCE AND TECHNOLOGY Bd. 17, 1983, SPRINGER -VERLAG, NEW YORK (USA), Seiten 287 - 302 G.S. SCHAJER ET AL. 'Analysis of Roll Tensioning and its Influence on Circular Saw Stability'

## Beschreibung

Die Erfindung betrifft eine Kreissägeblatt-Richtmaschine zur Beseitigung von Unebenheiten in Kreissägeblättern mit einander gegenüber auf beiden Seiten des Sägeblattes angeordneten gegeneinander pressbaren Richtrollen mit quer zur Laufrichtung konvex gekrümmter Lauffläche auf der Seite der Ausbuchtung einer Unebenheit und mit konkav gekrümmter Lauffläche auf der Seite der gegenüber der Ausbuchtung befindlichen Vertiefung zur Rückformung unebener Bereiche des Sägeblattes Eine derartige Richtmaschine ist bekannt.

Bei der Arbeit von Kreissägen in der Holzverarbeitung treten an den Sägeblättern Unebenheiten auf, die nach wenigen Stunden Arbeitszeit bereits einen Umfang annehmen können, der die Leistungsfähigkeit der Kreissäge stark beeinträchtigt. Kreissägeblätter müssen daher in regelmässigen Abständen gerichtet werden, das heisst Unebenheiten müssen beseitigt werden. Bisher wurde dies meist auf einer Richtbank von Hand vorgenommen. Das Sägeblatt wurde auf einer planen Stahlplatte mit einem Hammer von Unebenheiten befreit. Dies war eine sehr anstrengende und langwierige Arbeit und führt ausserdem nur zu recht groben Ergebnissen.

Aus der US-Patentschrift No. 510 210 ist eine Vorrichtung bekannt, die zum Beseitigen von Deformationen an Sägeblättern für Kreissägen dient. Diese Maschine besitzt Rollen oder Blöcke auf beiden Seiten des Sägeblattes, die so zueinander angeordnet sind, dass das Sägeblatt in einer der Verformung entgegengesetzten Richtung deformiert werden kann.

Aus US-4 852 430 ist eine Bandsägeblatt- Richtmaschine bekannt mit einer Messuhr zum Abtasten der Oberfläche des Blatts und zur Erzeugung eines Signals bei Unebenheiten im Sägeblattt und einer Richtstation mit zwei Paaren von Richtrollen sowie Mitteln zum Anpressen der Rollen an das Sägeblatt. Die Richtrollen umfassen zwei Paare von Rollen, von denen ein Paar zum Planieren von nach oben gerichteten Unebenheiten eine über dem Band angeordnete Rolle mit einer konvexen Rollfläche und eine dieser gegenüber unter dem Band angeordneten Rolle mit konkaver Rollfläche, das andere Paar zum Planieren von nach unten gerichteten Unebenheiten eine über dem Bande angeordnete Rolle mit einer konkaven Rollfläche und eine unter dem Band angeordnete Rolle mit konvexer Rollfläche aufweist. Die beiden Rollenpaare sind unmittelbar hintereinander und hinter der Messuhr angeordnet, so dass bei jedem Durchlauf eine gerade Linie des Sägeblatts gerichtet wird.

Diese Richtmaschine ist aber für Kreissägeblätter ungeeignet, weil es nicht möglich ist, gerade Umlaufbahnen für die Anordnung von Richtrollen und Messuhr hintereinander auf einem Kreissägeblatt zu definieren.

Der Erfindung liegt die Aufgabe zugrunde, eine Kreissägeblatt-Richtmaschine bereitzustellen, mit der die vorstehend erwähnten Unebenheiten bis zu Abweichungen aus der Ebene von dreihundertstel Millimetern beseitigt werden können. Ferner sollte vollautomatisches Arbeiten möglich sein, so dass keine Arbeitskraft gebunden wird.

Gemäss der Erfindung wird diese Aufgabe gelöst durch eine Kreissägeblatt-Richtmaschine der eingangs erwähnten Art, die sich dadurch auszeichnet, dass die Richtrollen oder -walzen zum Planieren von nach den verschiedenen Seiten des Sägeblattes gerichteten Unebenheiten auf einer durch die Mitte des Sägeblattes führenden Geraden in gleichen Abständen von der Mitte einander gegenüber angeordnet sind und dass eine Messuhr zum Abtasten der Oberfläche des Sägeblattes und zur Erzeugung eines Signals bei Unebenheiten um einen bestimmten Winkel gegenüber den Richtrollen versetzt im gleichen Abstand von der Mitte des Sägeblattes angeordnet ist.
Gemäss einer bevorzugten Ausführungsform sind die unter dem Sägeblatt angeordneten Rollen auf feststehenden Achsen und die über dem Sägeblatt angeordneten Rollen auf Achsen angeordnet, die zum Zweck des Anpressens bewegbar sind.
Gemäss einer anderen Ausführungsform sind sowohl die über dem Sägeblatt als auch die unter dem Sägeblatt angeordneten Rollen auf radial bewegbaren Achsen angeordnet und so anpressbar bzw. vom Blatt abhebbar. Auf diese Weise können Sägeblätter mit Ausnehmungen, Schlitzen, Einsätzen etc. ebenfalls bearbeitet werden.
Gemäss einer weiteren Ausführungsform der Erfindung bestehen die Mittel zum Anpressen der Rollen an das Sägeblatt bzw. zum Abheben derselben vom Sägeblatt aus einer pneumatischen oder hydraulischen Vorrichtung und Hebelarmen.

Vorzugsweise ist eine elektronische Steuereinheit vorgesehen, die die Signale von der Messuhr und die von der Antriebseinheit abgegebenen Signale über den Bandvorschub aufnimmt und zu einem Ausgangssignal verarbeitet, mit dem der Anpress- oder Abhebevorgang ausgelöst wird.

Gemäss einer weiteren vorteilhaften Ausführungsform ist ausser den Richtrollen mindestens ein Paar zusätzlicher Rollen vorgesehen, bei denen sowohl die obere als auch die untere Rolle eine quer zur Laufrichtung leicht konvex gekrümmte Oberfläche besitzt. Dieses zusätzliche Rollenpaar dient dem Einwalzen von Kreisspuren, die dem Blatt Spannung vermitteln.

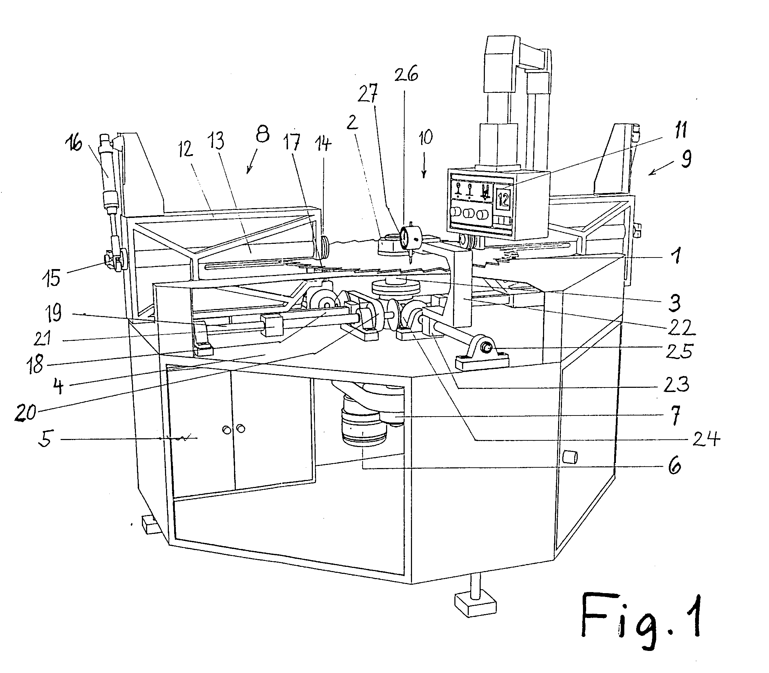

In der beiliegenden Zeichnung zeigen Fig. 1 eine perspektivische Gesamtdarstellung einer bevorzugten Ausführungsform der erfindungsgemässen Kreissägeblatt-Richtmaschine im Betrieb,
Fig. 2 eine vergrösserte Darstellung der Richtrollen in Seitenund Frontansicht,
Fig. 3 eine Draufsicht auf das in der Maschine befindliche Blatt mit der Anordnung der Rollen.

Ein Kreissägeblatt 1 ist mittels einer Spannmutter 2 auf eine senkrecht stehende Achse 3 aufgespannt. Die Achse 3 ist in der horizontalen Deckplatte 4 eines Gehäuses 5 gelagert und von einem Antriebsmotor 6 angetrieben, der unterhalb der Deckplatte im Gehäuse angeordnet ist. Mit der Achse 3 ist ferner ein Inkrementalgeber 7 verbunden, der an bestimmten Winkelpositionen der Achse elektrische Signale liefert.

Auf der Deckplatte 4 sind eine Richtstation 8 für das Planieren von nach unten gerichteten Unebenheiten im Sägeblatt 1, eine zweite Richtstation für das Planieren von nach oben gerichteten Unebenheiten im Sägeblatt 1, eine Messtation 10 und eine Steuerungseinheit 11 angeordnet, die im folgenden näher beschrieben werden. Die Richtstationen sind bezüglich der Achse 3 genau einander gegenüber bzw. um 180° gegeneinander versetzt angeordnet. Die Messtation 10 befindet sich im gleichen Winkelabstand von beiden Richtstationen, d.h. sie ist gegenüber diesen um 90° versetzt.

Die Richtstation 8 besitzt einen Rahmen 12 in dem eine Achse 13 für eine oberhalb des Sägeblattes angeordnete Richtrolle oder -walze 14 gelagert ist. Die Richtwalze 14 ist exzentrisch auf der Achse 13 gelagert derart, dass sie normalerweise einen geringen Abstand vom Sägeblatt hat und dass durch Drehung der Achse die Walze auf das Sägeblatt gepresst wird. Ein über einen Hebel 15 mit dem anderen Ende der Achse 13 verbundener und durch Signale von der Messtation gesteuerter Pneumatikzylinder 16 dient zur Drehung der Achse 13.

Unterhalb des Sägeblattes ist am Rahmen 12 eine zweite Rolle oder Walze 17 angeordnet, die ebenfalls am Sägeblatt anliegt. Sie dient als Widerlager, gegen welches das Sägeblatt gepresst wird, wenn die obere Walze 14 Druck auf das Sägeblatt ausübt.

Der Rahmen 12 ist auf einer fest mit dem Gehäuse verbundenen, radial zum Sägeblatt angeordneten Schiene 18 verschiebbar geführt. Eine parallel zur Schiene 18 angeordnete Gewindespindel 19, die durch einen Antrieb 20 gedreht wird und in einen mit dem Rahmen verbundenen Innengewindeblock 21 eingreift, bewirkt die Verschiebung des Rahmens mit den Richtwalzen radial zum Sägeblatt.

Die zweite Richtstation 9 ist genau gleich aufgebaut. Auch die Messtation besitzt einen in bezug auf das Sägeblatt radial verschiebbaren Rahmen 22, dessen Verschiebung in ähnlicher Weise mittels einer in einem am Rahmen 22 angeordneten Gewindeblock 23 geführten und von einer Antriebsanordnung 24 gedrehten Gewindespindel 25 erfolgt. Am Rahmen über dem Sägeblatt befindet sich eine Messuhr 26 mit einem auf dem Sägeblatt aufliegenden Taststift 27. Die Antriebe für die Gewindespindeln sind so aufeinander abgestimmt, dass sich der Taststift 27 und die Mittelebenen der vier Richtrollen immer auf derselben Kreislinie auf dem Sägeblatt befinden.

Es kann vorteilhaft sein, unterhalb des Sägeblattes an der Peripherie einen zusätzlichen niveaugenau einstellbaren Auflagepunkt für das Blatt vorzusehen.
Über der Messtation ist an einem Schwenkarm 28 an einem senkrechten Arm die elektronische Steuerung 11 angeordnet. Diese elektronische Steuerung wird hier nicht im einzelnen beschrieben, da die von ihr geforderte Funktion von einem Fachmann ohne weiteres mit einer geeigneten Schaltung verwirklicht werden kann.

Von der Messuhr 26 führt eine elektrische Leitung zur elektronischen Steuerung 11. Über diese Leitung erhält die Steuerung 11 ein Signal, wenn der Taststift 27 der Messuhr 26 über einen bestimmten Wert hinaus ausgelenkt wird. Dieser Wert ist an der Steuerungseinheit 11 einstellbar und beträgt beim vorliegenden Ausführungsbeispiel drei hundertstel Millimeter.

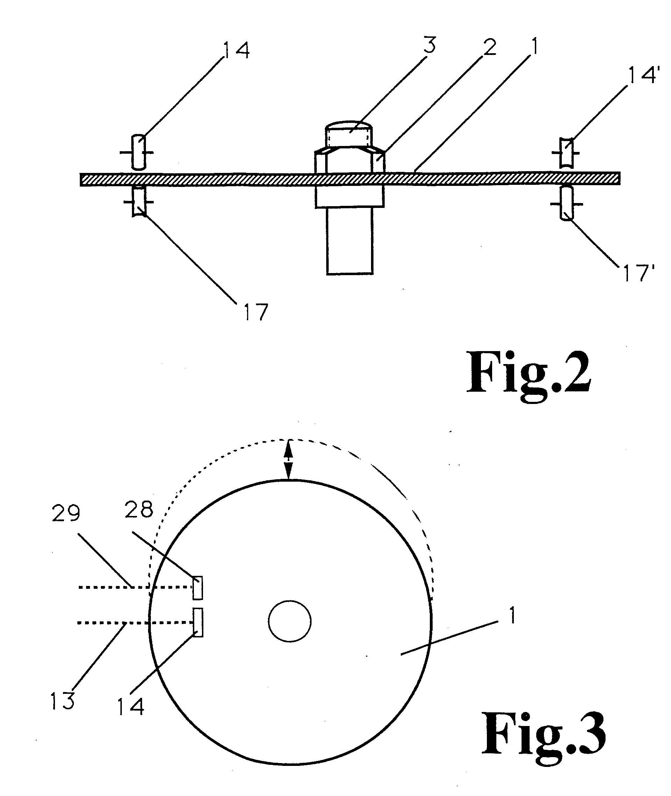

Die Form und Ausbildung der Rollen und ihre Funktion ist aus Fig. 2 ersichtlich. Es ist ersichtlich, dass die unteren beiden Rollen 17, 17′ mit dem Sägeblatt in Berührung sind. Die beiden oberen Rollen 14, 14′ befinden sich in einem geringen Abstand vom Sägeblatt. Sie werden, wie bereits erwähnt, nur bei Bedarf nach unten gedrückt. Die Rolle 14 hat eine konvexe Lauf- oder Rollfläche. Die unter ihr liegende Rolle 17 besitzt eine konkave Rollfläche. Wenn die obere Rolle nach unten gepresst wird, so wird das Sägeblatt von der Auswölbung der oberen Rolle in die Rille oder Nut der unteren Rolle hineingepresst. Dabei ist der entstehende Druck umso grösser je stärker die Unebenheit von dem ebenen Zustand abweicht.

Auf der rechten Seite ist die Situation umgekehrt. Die obere Rolle 14′ besitzt eine konkave Rollfläche, die untere Rolle 17′ eine konvexe Rollfläche. Wenn die obere Rolle 14′ nach unten gepresst wird, wird das Sägeblatt 1 von der Auswölbung der unteren Rolle in die Nut der oberen Rolle 14' hineingedrückt, so dass eine nach unten gerichtete Unebenheit ausgeglichen wird.

Grössere Unebenheiten sind bereits nach einem Durchlauf einer Spur beseitigt. Nach mehreren Durchläufen bis maximal fünf Mal, kann das Sägeblatt wieder als vollkommen eben bezeichnet werden. Nach der Anzahl von gewählten Durchläufen für eine Spur wird eine Verschiebung der Richtrollen und der Messuhr um die Rollenbreite von ca. 5 mm vorgenommen, so dass die nächste Spur in Angriff genommen werden kann .

Es hat sich als vorteilhaft erwiesen, dass bei den Gewindespindeln, die zum Vorschub der Richtvorrichtungen radial zum Sägeblatt dienen, ein gewisses Spiel vorgesehen ist, so dass bei dem Vorgang in umgekehrter Richtung, d.h. beim Zurückfahren der Richtvorrichtung und der Messuhr eine Überlappung der Spuren stattfindet. Dies ist von besonderem Vorteil, wenn breitere Rollen zum Einsatz kommen, beispielsweise 10 mm, um grössere Sägeblätter schneller verarbeiten zu können.

Die Überlappung der Spuren kann aber auch direkt durch geeignete Vorschubschritte bei Verwendung von Schrittmotoren für den Spindelantrieb eingestellt werden.

Die Funktion der Maschine ist ohne weiteres ersichtlich. Das Sägeblatt wird durch den Antriebmotor 6 so angetrieben, dass es beispielsweise im Uhrzeigersinn läuft. Die Richtstationen 8 und 9 und die Messtation 10 sind so positioniert, dass der Taststift 27 der Messuhr 26 und die Mittelebenen der Rollen auf derselben Kreislinie des Sägeblatttes liegen. Zu Beginn des Richtvorganges wird mit dem kleinsten Kreis, d.h. nahe bei der Achse 3 begonnen, weil von dort das Nullniveau des Sägeblattes festgelegt wird. Der Richtvorgang für eine Spur kann einen Durchlauf oder mehrere Durchläufe des Sägeblattes dauern. Die Anzahl der Durchläufe pro Spur wird an der Steuerungseinheit 12 eingestellt.

Wenn nun die Messuhr eine über dem vorgegebenen Grenzwert liegende Unebenheit feststellt, so wird mit Hilfe des Inkrementalgebers 7 gleichzeitig die Dauer festgehalten, die der Entfernung von der Messuhr bis zu den Richtrollen entspricht. Nach Ablauf dieser Zeit gibt die Steuerungseinheit 11 ein Signal an die Richteinheit, das bewirkt, dass einer der beiden pneumatischen Zylinder durch Drehen der entsprechenden Welle eine der beiden oberen Rollen mit vorgegebenem Druck auf das Sägeblatt presst. Falls die Unebenheit eine Beule nach oben war, so wird die erste Rolle nach unten gedrückt. Falls es sich um eine Vertiefung handelte, so wird die zweite Rolle nach unten gedrückt.

Die bis hier beschriebene Ausführungsform der Erfindung eignet sich zur Bearbeitung von Kreissägeblättern, die keinerlei Unterbrechungen des Blattes aufweisen. Neben diesen Kreissägeblättern gibt es auch solche, die Ausnehmungen, wie z.B. Schlitze, Löcher etc. oder Erhöhungen, wie z.B. Räumschneiden etc. aufweisen. Bei der Bearbeitung dieser Kreissägeblätter würde der Messfühler die Ausnehmungen oder Erhöhungen als auszugleichende Unebenheiten detektieren und entsprechende Signale an die Steuerung der Richtrollen geben. Dies würde unzulässige Richtvorgänge auslösen.

Um dies zu vermeiden, ist bei einer weiteren Ausführungsform der Erfindung eine Einrichtung zum Detektieren von Ausnehmungen und Mittel zum entsprechenden Abheben der beidseitig der Kreissägeblätter angeordneten Richtrollen vorgesehen. Der Messfühler ist zusätzlich mit zwei Lichtschranken versehen, die einander gegenüber seitlich neben dem Fühler angeordnet sind. Sie liegen in einer radialen Ebene bezüglich des Kreissägeblattes. Ihr Abstand voneinander beträgt beispielsweise 5 bis 10 mm mehr als die Rollenbreite.

Die Lichtschranken bestehen je aus einer über dem Kreissägeblatt angeordneten Lichtguelle und einem unterhalb desselben befindlichen Detektor. Wenn die zu bearbeitenden Kreissägeblätter Ausnehmungen aufweisen, die von den Lichtschranken erfasst werden, wird durch die Steuereinheit nach entsprechendem Winkelabstand ein Impuls zum Abheben der Rollen gegeben.

Bei Ausnehmungen in den Kreissägeblättern und vor allem bei den in der Regel am Rande von Schlitzen befindlichen Erhöhungen, wie z.B. Räumschneiden, müssen sowohl die oberen als auch die unteren Rollen von den Kreissägeblättern abgehoben werden, um Beschädigungen zu vermeiden. Zu diesem Zweck sind bei der Ausführungsform für die Bearbeitung von Kreissägeblättern mit Ausnehmungen und/oder Erhöhungen die unterhalb der Blätter laufenden Richtrollen wie die anderen auf bewegbaren Achsen gelagert. Diese Achsen sind in grundsätzlich gleicher Weise wie die Achsen 13 so bewegbar, dass die Richtrollen an die Kreissägeblätter angepresst oder von ihnen abgehoben werden können.

Für Kreissägeblätter mit Ausnehmungen und/oder Erhöhungen ist auch die Messuhr 26 modifiziert. Anstelle des Taststiftes 27 ist eine Kugel von beispielsweise 10 mm Durchmesser vorgesehen, die ohne Schaden zu nehmen in eine Ausnehmung "hineinfallen" und an der folgenden Kante wieder angehoben werden kann. Ebenso kann die Kugel problemlos über Erhöhungen hinwegrollen. Zweckmässigerweise ist die Bewegung der Kugel nach unten durch einen Anschlag begrenzt.

Durch den von der Steuerungseinheit abgegebenen Impuls zum Abheben der Rollen wird der Richtvorgang solange unterbrochen, wie eine Ausnehmung zwischen den Rollen durchläuft. Danach setzt sich der Richtvorgang normal fort.

Eine weitere Ausführungsform der Erfindung weist zusätzliche Einrichtungen auf, um gewünschte Spannung in die Kreissägeblätter einzuwalzen. Grundsätzlich ist dieser Vorgang bekannt und wurde auf speziell dafür bestimmten Vorrichtungen vorgenommen. Wie in der Draufsicht der Fig. 3 schematisch gezeigt, ist neben der Richtrolle 14 eine weitere Rolle 28 oberhalb des Blattes angeordnet. Sie ist auf einer parallel zur Achse 13 liegenden und im Prinzip gleich wie diese bewegbaren Achse 29 gelagert. Unterhalb des Blattes befindet sich eine identisch gleiche Rolle (nicht gezeigt), die ebenfalls auf einer entsprechend bewegbaren Achse gelagert ist. Die Rolle 28 und ihr Gegenstück auf der Unterseite haben quer zur Laufrichtung eine sehr schwache konvexe Wölbung.

Anstatt ein Paar Spannungswalzrollen 28 können auch zwei Paare jeweils neben den beiden Richtrollenpaaren vorgesehen werden.

Diese beiden Spannungswalzrollen bzw. -rollenpaare müssen wie die Richtrollen im Betrieb so zum Kreissägeblatt stehen, dass die Achse 29 in einer Radialebene liegt. Zu diesem Zweck sind Mittel vorgesehen, mit denen das eingespannte Kreissägeblatt samt Antrieb um den Abstand zwischen den Rollen 14 und 28 verschoben werden kann, wie durch die gestrichelte Kreislinie angedeutet. Die Mittel zur Verschiebung des Blattes sind nicht gezeigt, da sie vom Fachmann ohne weiteres mechanisch verwirklicht werden können.

Mit diesen zusätzlichen Rollen werden durch Druck, den sie gegeneinander gerichtet auf das dazwischen laufende Blatt ausüben eine der mehreren Kreisspuren so gewalzt, dass das Blatt Spannung erhält.

## Patentansprüche

1. Kreissägeblatt-Richtmaschine zur Beseitigung von Unebenheiten in Kreissägeblättern mit einander gegenüber auf beiden Seiten des Sägeblattes (1) angeordneten gegeneinander pressbaren Richtrollen oder -walzen (14, 14', 17, 17') mit quer zur Laufrichtung konvex gekrümmter Lauffläche auf der Seite der Ausbuchtung einer Unebenheit und mit konkav gekrümmter Lauffläche auf der Seite der gegenüber der Ausbuchtung befindlichen Vertiefung zur Rückformung unebener Bereiche des Sägeblattes, dadurch gekennzeichnet, dass die Richtrollen oder -walzen (14, 14', 17, 17') zum Planieren von nach den verschiedenen Seiten des Sägeblattes (1) gerichteten Unebenheiten auf einer durch die Mitte des Sägeblattes führenden Geraden in gleichen Abständen von der Mitte einander gegenüber angeordnet sind und dass eine Messuhr (26) zum Abtasten einer Oberfläche des Sägeblattes und zur Erzeugung eines Signals bei Unebenheiten um einen bestimmten Winkel gegenüber den Richtrollen versetzt im gleichen Abstand von der Mitte des Sägeblattes angeordnet ist.

2. Kreissägeblatt-Richtmaschine nach Anspruch 1, dadurch gekennzeichnet, dass die Richtrollen (14, 14′, 17, 17′) und die Messuhr (26) nach einer oder mehreren Umdrehungen des Sägeblattes um die gleiche Strecke zur Mitte oder zum Umfang des Sägeblattes verschoben werden.

3. Kreissägeblatt-Richtmaschine nach Anspruch 1, dadurch gekennzeichnet, dass die auf der einen Seite des Sägeblattes angeordneten Rollen (17) auf feststehenden Achsen gelagert sind.

4. Kreissägeblatt-Richtmaschine nach Anspruch 3, dadurch gekennzeichnet, dass die auf beiden Seiten des Sägeblattes angeordneten Rollen (14) auf Achsen (13) gelagert sind, die zum Zweck des Anpressens bewegbar sind.

5. Kreissägeblatt-Richtmaschine nach Anspruch 1, dadurch gekennzeichnet, dass die Mittel zum Anpressen der Rollen aus einer hydraulischen oder pneumatischen Vorrichtung (16) und Hebelarmen (15) bestehen.

6. Kreissägeblatt-Richtmaschine nach Anspruch 1, gekennzeichnet durch eine elektronische Steuereinheit (11) zur Aufnahme von Signalen von der Messuhr (26) und von der Antriebseinheit (6,7) und zur Verarbeitung der Signale zu einem Ausgangssignal, mit dem der Anpressvorgang ausgelöst wird.

7. Kreissägeblatt-Richtmaschine nach Anspruch 1, gekennzeichnet durch Mittel zum Einwalzen von Spannung gebenden Spuren in das Blatt.

8. Kreissägeblatt-Richtmaschine nach Anspruch 7, dadurch gekennzeichnet, dass dieses Mittel aus mindestens einem zusätzlichen Rollenpaar besteht mit zwei gleichen, quer zur Lauffläche schwach konvex gewölbten Rollen auf beiden Seiten des Blattes und Einrichtungen zum Anpressen der Rollen an das Blatt.

9. Kreissägeblatt-Richtmaschine nach Anspruch 4, gekennzeichnet durch Mittel zur Erfassung von Ausnehmungen im bearbeiteten Sägeblatt.

## Claims

1. A circular saw blade straightening machine for eliminating unevenness in circular saw blades having straightening rollers or straightening cylinders (14,14', 17,17') that can be pressed against each other disposed opposite each other on both sides of the saw blade (1) with convexly curved running surface transverse to the direction of movement on the side of the protrusion of an unevenness and with concavely curved running surface on the side of the depression disposed opposite the protrusion to reshape uneven areas of the saw blade, characterised in that the straightening rollers or straightening cylinders (14,14', 17,17') for planing of unevenness directed towards the different sides of the saw blade (1) are disposed opposite one another on a straight line passing through the centre point of the saw blade at equal distances from the centre point and that a feeler gauge (26) is provided to scan one surface of the saw blade and to generate a signal in the event of unevenness at a certain angle to the straightening rollers at the same distance from the centre point of the saw blade.

2. A circular saw blade straightening machine according to claim 1, characterised in that the straightening rollers (14,14', 17,17') and the feeler gauge (26) are displaced by the same distance towards the centre point or towards the circumference of the saw blade after one or several revolutions of the saw blade.

3. A circular saw blade straightening machine according to claim 1, characterised in that the rollers (17) disposed on one side of the saw blade are mounted on fixed axes.

4. A circular saw blade straightening machine according to claim 3, characterised in that the rollers (14) disposed on both sides of the saw blade are mounted on axes (13) which are moveable for purposes of pressing.

5. A circular saw blade straightening machine according to claim 1, characterised in that the means for pressing the rollers consist of a hydraulic or pneumatic device (16) and lever arms (15).

6. A circular saw blade straightening machine according to claim 1, characterised by an electronic control unit (11) for receiving signals from the feeler gauge (26) and from the drive unit (6,7) and for processing the signals to an output signal with which the pressing process is triggered.

7. A circular saw blade straightening machine according to claim 1, characterised by means for rolling tension-generating tracks into the blade.

8. A circular saw blade straightening machine according to claim 7, characterised in that these means consist of at least one additional pair of rollers with two similar slightly convexly curved rollers transverse to the running surface on both sides of the blade and means for pressing the rollers against the blade.

9. A circular saw blade straightening machine according to claim 4, characterised by means for detecting apertures in the treated saw blade.

## Revendications

1. Machine à planer les lames de scies circulaires pour éliminer des déformations de lames de scies circulaires comprenant des rouleaux ou des tambours (14,14',17,17') à planer disposée de part et d'autre des faces de la lame de scie (1) et qui peuvent être appliqués l'un vers l'autre, ces rouleaux ou ces tambours à planer ayant, du côté de la courbure d'une déformation, une surface de roulement convexe perpendiculaire au sens de rotation, et, du côté de la dépression, une surface de roulement concave qui se trouve en face de la courbure pour la remise dans sa forme initiale d'une zone non plane de la scie, caractérisée en ce que les rouleaux ou les tambours à planer (14,14',17,17') pour planer des déformations qui sont dirigées des différents côtés de la lame de scie (1), sont disposés sur une droite qui passe par le centre de la lame de scie, les uns en face des autres, à égale distance du centre, et en ce qu'un comparateur (26) est disposé avec un décalage angulaire déterminé par rapport aux rouleaux à planer, à une distance égale du centre de la scie, pour palper une surface de la lame de scie et pour fournir un signal en cas de déformation.

2. Machine à planer les lames de scies circulaires selon la revendication 1, caractérisée en ce que les rouleaux à planer (14,14',17,17') et le comparateur (26) sont translatés, d'un même trajet en direction du centre ou de la périphérie de la lame de scie, après un ou plusieurs tours de la lame de scie.

3. Machine à planer les lames de scies circulaires selon la revendication 1, caractérisée en ce que les rouleaux (17) disposés d'un côté de la lame de scie sont montés sur des axes définis.

4. Machine à planer les lames de scies circulaires selon la revendication 3, caractérisée en ce que les rouleaux (14) disposés des deux côtés de la lame de scie sont montés sur des axes (13) qui sont mobiles pour pouvoir appliquer une pression.

5. Machine à planer les lames de scies circulaires selon la revendication 1, caractérisée en ce que les moyens pour appliquer une pression sur les rouleaux comprennent un dispositif pneumatique ou hydraulique (16) et des bras de levier (15).

6. Machine à planer les lames de scies circulaires selon la revendication 1, caractérisée par une unité de commande électronique (11) pour l'enregistrement de signaux provenant du comparateur (26) et de l'unité d'entraînement (6,7) et pour la transformation des signaux en un signal de sortie par lequel le processus d'application de pression est enclenché.

7. Machine à planer les lames de scies circulaires selon la revendication 1, caractérisée par des moyens pour laminer des traces qui engendrent des tensions dans la lame.

8. Machine à planer les lames de scies circulaires selon la revendication 7, caractérisée en ce que ces moyens comprennent au moins une paire de rouleaux supplémentaires ayant deux mêmes rouleaux perpendiculaires à la surface de roulement et légèrement convexes de part et d'autre de la lame et deux mêmes dispositifs pour presser les rouleaux contre la lame.

9. Machine à planer les lames de scies circulaires selon la revendication 4, caractérisée par des moyens pour détecter des évidements dans la lame de scie ouvrée.
